# EUROPEAN PATENT SPECIFICATION

(11) **EP 4 076 823 B1**
(45) Date of publication and mention of the grant of the patent: **06.03.2024**
(21) Application number: 20833952.3
(22) Date of filing: 14.12.2020
(51) Int. Cl.: B23K 26/00, B23K 26/046, B23K 26/06, B23K 26/082, B23K 26/08, B23K 26/352, B23D 36/00, B23D 15/00, B23K 101/28, B23K 103/00

(54) **CUTTING STATION FOR PROFILED ELEMENTS, PARTICULARLY FOR WINDOW AND DOOR FRAMES, WITH A LASER MARKING ASSEMBLY**
SCHNEIDESTATION FÜR PROFILELEMENTE, INSBESONDERE FÜR FENSTER- UND TÜRRAHMEN, MIT EINER LASERMARKIERUNGSANORDNUNG
POSTE DE COUPE D'ÉLÉMENTS PROFILÉS, EN PARTICULIER DE CADRES DE FENÊTRE ET DE PORTE, DOTÉ D'UN ENSEMBLE DE MARQUAGE AU LASER

(30) Priority: 17.12.2019 IT 201900024262
(43) Date of publication of application: 26.10.2022
(73) Proprietor: Graf Synergy S.r.L., 41015 Nonantola (MO) (IT)
(72) Inventor: VACCARI, Andrea, 41015 Nonantola (MO) (IT); DE GRANDIS, Denis, 41015 Nonantola (MO) (IT)
(74) Representative: Luppi, Emanuele
(86) International application number: PCT/IB2020/061892
(87) International publication number: WO 2021/124070

(56) References cited:
- EP-A1- 3 228 417
- CN-U- 203 636 088
- KR-A- 20150 055 230
- US-A1- 2012 013 661

## Description

The present invention relates to a cutting station for profiled elements, particularly for window and door frames.

### Background Art

A profiled element is a manufactured product obtainable, e.g., by extrusion of plastic or metal material.

The profiled element thus obtained extends along a longitudinal direction that substantially coincides with the exit direction of the material from an appropriate extrusion line.

In order to obtain a window or door frame, the profiled element is conveniently cut to the desired length so as to create a plurality of portions provided at the ends with at least one area to be welded which is transverse to the longitudinal direction of the profiled element itself. The union of the portions of profiled element through the respective areas to be welded allows manufacturing a window or door frame.

The cutting operation is generally carried out by means of suitable cutting stations provided with at least one basic structure and with at least one cutting assembly associated therewith.

The cutting stations of known type further comprise at least one line of movement of the profiled element to position it at the cutting assembly.

The cutting assembly comprises at least one cutting tool, of the type of a disc blade or the like, movable on the basic structure to move close to/away from the profiled element and to make an area to be welded according to a predetermined angle.

In particular, the cutting assembly is adapted to cut the profiled element according to at least one angle of width comprised between 10° and 170°, usually 45°, 90° or 135°, with respect to the aforementioned longitudinal direction to obtain a plurality of portions.

The portions are then transferred to subsequent machining stations to be assembled into a window or door frame.

The cutting stations of known type are also generally provided with a marking assembly intended to identify the portions of profiled element to allow later recognition thereof.

The marking assembly may be of the type of a labeling machine intended to affix an identification label onto the profiled element, or it may be of the type of a printer, intended to print ink according to an identification mark.

The cutting stations of known type do have some drawbacks.

In fact, the marking assembly is generally provided with large dimensions and is placed at a suitable distance from the cutting assembly, in order not to hinder the movement of the cutting tool.

This causes the profiled element having to be further moved and positioned on the basic structure to perform the marking operation.

It is important to point out, in fact, that in order to perform their function, the marking assemblies of known type need to be substantially in contact with the profiled element so as to apply the adhesive label and/or deposit the ink on the surface of the profiled element itself.

As a result, the machining process is constantly interrupted, resulting in being discontinuous and leading to longer timelines.

In addition, the marking assemblies of known type may have functional drawbacks due to paper and/or ink exhaustion, ink drying, jams due to the presence of numerous moving components and, last but not least, high maintenance costs.

These factors contribute to increased timelines and costs associated with the manufacturing process.

Cutting stations of the known type are also disclosed in documents KR 2015 0055230 A (disclosing all the features of the preamble of claim 1), US 2012/013661 A1 and EP 3 228 417 A1.

### Description of the Invention

The main aim of the present invention is to devise a cutting station for profiled elements, particularly for window and door frames, which allows the identification of the profiled element and of the relevant portions in a practical and easy way.

Within such technical aim, one object of the present invention is to reduce the timelines related to such operation.

A further object of the present invention is to devise a cutting station for profiled elements, particularly for window and door frames, that allows achieving a significant reduction in costs and an increase in the production yields of the machining process.

Another object of the present invention is to devise a cutting station for profiled elements, particularly for window and door frames, which allows overcoming the above mentioned drawbacks of the prior art within a simple, rational, easy, effective to use as well as low cost solution.

The above mentioned objects are achieved according to the present invention by a cutting station for profiled elements, particularly for window and door frames having the characteristics of claim 1.

Preferred embodiments of the present invention are defined in the dependent claims.

### Brief Description of the Drawings

Other characteristics and advantages of the present invention will become more evident from the description of a preferred, but not exclusive, embodiment of a cutting station for profiled elements, particularly for window and door frames, illustrated by way of an indicative, yet non-limiting example, in the accompanying tables of drawings wherein:
Figure 1 is an axonometric view of an embodiment of the cutting station for profiled elements according to the invention;
Figure 2 is a top view of an embodiment of the cutting station according to the invention;
Figure 3 is an axonometric view of a component of the cutting station according to the invention;
Figure 4 is an axonometric view of a component of the cutting station according to the invention, according to a different angle;
Figure 5 is a partial side view of the cutting station according to the invention.

### Embodiments of the Invention

With particular reference to these figures, reference numeral 1 globally indicates a cutting station for profiled elements, particularly for window and door frames. In the context of the present discussion, "profiled element" means a manufactured article obtainable, for example, by extrusion of plastic or metal material from an extrusion line.

The profiled element P thus obtained is therefore provided with at least two main faces M and two lateral faces L, that extend along a longitudinal direction and are mutually opposite and contiguous to each other.

In particular, the longitudinal direction of the profiled element P coincides with the exit direction of the material from the extrusion line.

The term "main faces" relates to the substantially flat surfaces of the profiled elements intended to lie substantially parallel to the lying plane of the window or door frame manufactured with the profiled elements themselves; in actual facts, when the window or door frame is mounted on a wall, the main faces are the surfaces of the profiled elements intended to be facing the inside or the outside of the wall.

On the other hand, the term "lateral faces" relates to the surfaces of the profiled elements intended to lie substantially perpendicular to the lying plane of the window or door frame manufactured with the profiled elements themselves.

In actual facts, in the case of doors or windows, at least one of the lateral faces of each profiled element is intended to intercept a central panel (such as a glass pane) of the window or door frame and the other of the lateral faces is intended to define the outer lateral perimeter of the window or door frame and abuts against a framework of the window or door frame fixed to the wall.

In the case of the framework of the window or door frame, instead, at least one of the lateral faces of each profiled element is intended to abut against the door or window (when closed), while the other of the lateral faces is intended to face the wall to which the frame is fixed.

In order to obtain a window or door frame, the profiled element P is conveniently shaped through a cutting operation so as to create an area to be welded, transverse to the longitudinal direction of the profiled element itself. The union of several profiled elements through the respective areas to be welded allows manufacturing the window or door frame.

The station 1 comprises at least one basic structure 2, preferably positioned resting on the ground.

The station 1 also comprises:
- at least one line of movement 3, 4 of at least one profiled element P associated with the basic structure 2 and adapted to move the profiled element P along a direction of movement D in order to displace it with respect to the basic structure 2; and
- at least one cutting assembly 5 associated with the basic structure 2, arranged along the direction of movement D and adapted to cut the profiled element P according to at least one angle of width comprised between 10° and 170° with respect to the longitudinal direction in order to obtain at least two portions of profiled element P1, P2.

The cutting assembly 5 will be described in more detail later in this discussion. The line of movement 3, 4 extends along the direction of movement D.

The line of movement 3, 4 has the function of supporting and allowing the correct positioning of the profiled element P before cutting.

In the particular embodiment shown in the figures, the profiled element P is positioned on the line of movement 3, 4 so that the longitudinal direction is substantially parallel to the direction of movement D; alternative embodiments cannot however be ruled out in which the line of movement 3, 4 is arranged to receive and move the profiled element P along a direction of movement D transverse to the longitudinal direction.

In the particular embodiment shown in the figures, moreover, the profiled element P is positioned in such a way that at least one of the main faces M is placed resting on the line of movement 3, 4; alternative solutions are however possible in which, on the other hand, the line of movement 3, 4 is arranged to receive the profiled element P resting on one of the lateral faces L.

The line of movement 3, 4 comprises at least one supply section 3 and one away section 4; the cutting assembly 5 is interposed between the supply section 3 and the away section 4.

In more detail, the supply section 3 is arranged upstream of the cutting assembly 5 with respect to the direction of movement D while the away section 4 is arranged downstream of the cutting assembly 5.

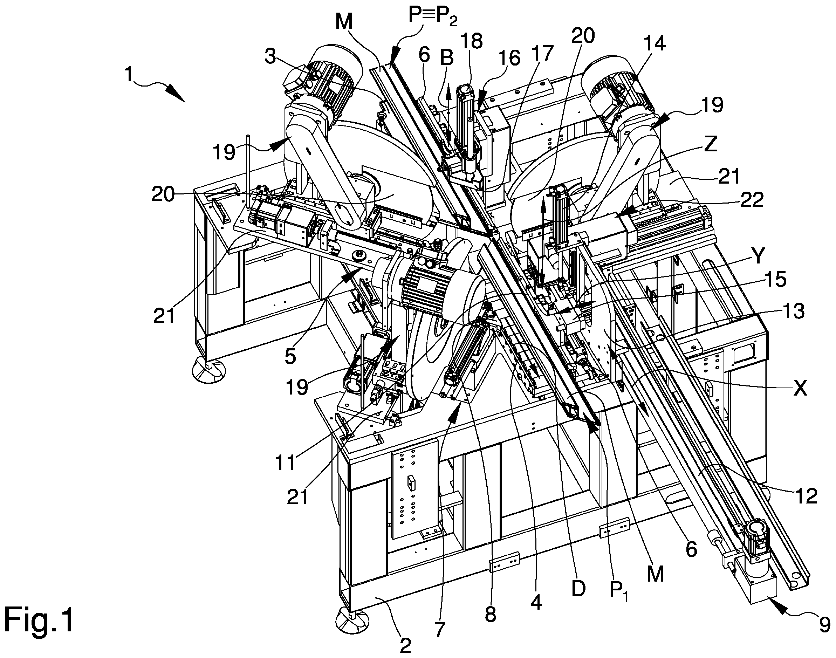

In the embodiment shown in Figure 1, the supply section 3 is of the type of a resting plane and the away section 4 is of the type of a roller conveyor.

At least one of either the supply section 3 or the away section 4 comprises at least one positioning guide 6 extending along the direction of movement D. The positioning guide 6 defines an abutment surface 6a or back adapted to abut laterally against the profiled element P.

In other words, the positioning guide 6 allows preventing the profiled element P from displacing along at least one direction transverse to the direction of movement D.

The station 1 also comprises a retaining assembly 7, 16 adapted to operate in conjunction with the line of movement 3, 4 to retain the profiled element P. The function of the retaining assembly 7, 16 is to keep the profiled element P stationary in order to allow it to be cut accurately and precisely.

The retaining assembly 7, 16 comprises at least one retaining device 7 associated with the basic structure 2 and adapted to operate in conjunction with the positioning guide 6 to retain the profiled element P.

The retaining device 7 is arranged in the proximity of the cutting assembly 5. The retaining device 7 comprises at least one transverse retaining element 8 movable along a substantially horizontal and transverse direction to the direction of movement D to bring the profiled element P in contact with the abutment surface 6a of the positioning guide 6.

Conveniently, the retaining assembly 7, 16 comprises a pair of retaining devices 7.

More specifically, one of the retaining devices 7 is arranged at the supply section 3 and the other of the retaining devices 7 is arranged at the away section 4.

Advantageously, therefore, the retaining devices 7 are adapted to retain the profiled element P upstream and downstream of the cutting assembly 5.

The retaining assembly 7, 16, further comprises at least one pressing device 16 arranged upstream of the cutting assembly 5 and adapted to operate in conjunction with the supply section 3.

Conveniently, the pressing device 16 is arranged in the proximity of the cutting assembly 5 and is adapted to retain the profiled element P at the area to be cut. The pressing device 16 comprises:
- at least one pressing element 17 movable along a pressing direction B transverse to the direction of movement D between a retaining position, wherein it holds the profiled element P on the supply section 3, and a release position, wherein it allows the movement of the profiled element P; and
- at least one actuator element 18 adapted to move the pressing element 17, between the retaining position and the release position.

In particular, in the embodiment shown in the figures, the pressing element 17 comprises a substantially flat pressing surface arranged parallel to the main face M of the profiled element P.

The actuator element 18 is of the type of a pneumatic cylinder and has the function of bringing the pressing element 17 in contact with the profiled element P in order to exert pressure thereon so as to retain it on the supply section 3.

As a result of the cutting operation, a first portion P1, downstream of the cutting assembly 5, and a second portion P2, upstream of the cutting assembly 5, are obtained with respect to the direction of movement D.

The first portion P1 is, therefore, arranged on the away section 4 and can be transferred to further processing stations, while the second portion P2 is arranged on the supply section 3.

The station 1 also comprises at least one extraction device 9 arranged downstream of the cutting assembly 5 and adapted to operate in conjunction with the away section 4 to move the first portion P1 away from the line of movement 3, 4.

The extraction device 9 comprises at least one supporting framework 10 associated with the basic structure 2 and at least one gripping element 11 associated with the supporting framework 10 by interposition of a movement system 12, 14, 15 of the gripping element itself.

The movement system 12, 14, 15 is adapted to move the gripping element 11 along a first axis X substantially parallel to the direction of movement D, a second axis Y substantially horizontal and orthogonal to the first axis X, and a third axis Z substantially vertical and orthogonal to the first axis X and to the second axis Y.

In more detail, the movement system 12, 14, 15 comprises:
- at least one guidance body 12 extending along the first axis X and supporting a slide element 13 in a sliding manner;
- at least one actuator body 14 associated with the guidance body 12 and operable along the third axis Z; and
- at least one shifting body 15 of the gripping element 11 along the second axis Y, associated with the actuator body 14.

The guidance body 12 allows the movement of the gripping element 11 along the first axis X to allow it to be positioned at the cutting area.

The function of the shifting body 15 is to position the gripping element 11 with respect to the first portion P1, along the second axis Y, based on the dimensions of the first portion itself.

The actuator body 14 is of the type of a pneumatic cylinder and has the function of bringing the gripping element 11 in contact with the first portion P1 in order to exert pressure thereon which is adapted to generate a friction force between the gripping element 11 and the first portion P1 sufficient to allow the extraction thereof.

In actual facts, the movement system 12, 14, 15 allows the gripping element 11 to intercept the first portion P1 and drag it along the direction of movement D to move it away from the line of movement 3, 4 and allow a new cutting operation to be performed.

As shown in Figure 1, the gripping element 11 is substantially "L"-shaped. This particular conformation allows the gripping element 11 to be positioned at the cutting area of the profiled element P, and to easily extract even the first portions P1 of reduced length.

Moreover, the "L" shape allows the gripping element 11 to avoid contact with some critical points of the profiled element P that could be damaged, such as e.g. the seat of the gaskets.

It cannot however be ruled out that the gripping element 11 may have a different conformation.

Again, embodiments of the present invention cannot be ruled out in which the movement of the first portion P1 is performed manually by an operator.

The second portion P2, in turn, may be transferred to further machining stations or be subjected to a new cutting operation. In the latter case, the second portion P2 defines to all intents and purposes a new profiled element P like the one described above, which is moved along the direction of movement D to position itself with respect to the cutting assembly 5 in a new cutting position. Embodiments cannot however be ruled out in which the supply section 3 and/or the away section 4 are movable along the direction of movement D to approach the profiled element P and move away the first portion P1, respectively, with respect to the cutting assembly 5.

Conveniently, the cutting assembly 5 comprises at least one working head 19 provided with at least one cutting tool 20.

In more detail, the working head 19 comprises at least one supporting base 21, associated with the basic structure 2, and supporting the cutting tool 20.

The cutting tool 20 is preferably of the type of a disc blade or the like and is movable in rotation around a respective axis to carry out the cutting operation; alternative embodiments cannot however be ruled out in which the cutting tool is different and consists e.g. of a hot blade cutting element which, when heated, is capable of at least partly melting the profiled element P along the cutting plane.

Advantageously, the working head 19 is movable with respect to the basic structure 2 to move close to/away from the profiled element P.

More in detail, in order to perform the cutting operation, the working head 19, by moving close to the profiled element P, allows the interaction between the cutting tool 20 and the profiled element itself.

The working head 19 is movable along a cutting direction T transverse to the direction of movement D to bring the cutting tool 20 in contact with the profiled element P to define an area to be welded transverse to the longitudinal direction of the profiled element itself.

In particular, the inclination of the cutting direction T with respect to the direction of movement D determines the width of the angle formed between the area to be welded and the longitudinal direction of the profiled element P.

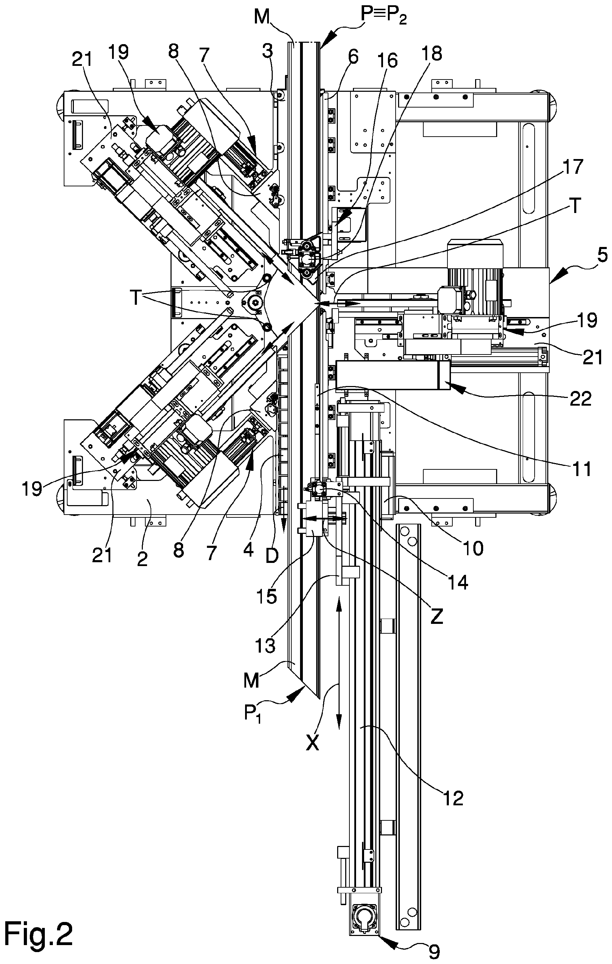

In the embodiment shown in Figures 1 and 2, the cutting assembly comprises a plurality of working heads 19.

Each of the working heads 19 is arranged on the basic structure 2 so as to make an area to be welded inclined according to a respective angle.

In particular, with reference to the embodiment of Figures 1 and 2, a working head 19 is arranged substantially perpendicular to the direction of movement D and is adapted to make an area to be welded inclined by an angle of 90° with respect to the longitudinal direction.

The other two working heads 19 are arranged as follows: one at the supply section 3 and one at the away section 4, and they are inclined with respect to the direction of movement D so as to make areas to be welded according to an angle having a width substantially equal to 45° and 135°.

Still with reference to the embodiment shown in Figures 1 and 2, the working heads 19 make two cuts at 45° and 135° between the first portion P1 and the second portion P2 and the complementary waste portion, which is generated through this operation, is removed from the line of movement 3, 4, e.g. by dropping, in a manner known to the technician in the field.

Embodiments cannot however be ruled out in which the working heads 19 are arranged according to angles of different width.

Likewise, it cannot be ruled out that the cutting assembly 5 may comprise an individual working head 19 movable in rotation with respect to the basic structure 2 to position itself with respect to the direction of movement D according to a plurality of different angles.

According to the invention, the station 1 comprises at least one laser marking assembly 22 associated with the basic structure 2 and adapted to emit at least one laser beam R towards the profiled element P in order to engrave at least one identification mark on the profiled element itself.

In particular, the identification mark may be a serial number, and/or a code (of the type of a bar code or the like), and/or a distinctive logo/brand of the manufacturer, and/or any other mark useful to distinguish a profiled element P or a portion thereof P1, P2 from another.

The engraving by the laser beam R can occur by chromatic variation of the material with which the profiled element P is made, by removal of the material itself, or in other ways known to the technician in the field.

The laser marking assembly 22 is placed laterally to the line of movement 3, 4 and is adapted to emit the laser beam R towards at least one of the lateral faces L.

It cannot however be ruled out that based on the positioning of the profiled element P on the line of movement 3, 4, the laser marking assembly 22 may be arranged on the basic structure 2 in a different manner.

Likewise, it cannot be ruled out that the laser marking assembly 22 may be placed on the basic structure 2 so as to emit the laser beam R towards at least one of the main faces M.

Conveniently, the laser marking assembly 22 is placed in the proximity of the cutting assembly 5.

Such layout allows the engraving to be made when the profiled element P is positioned on the line of movement 3, 4 and retained by means of the retaining assembly 7, 9, 16.

In more detail, engraving can be done at the same time as cutting or immediately before or after the cutting operation.

In other words, the laser marking assembly 22 allows engraving the identification mark without the need to interrupt the machining process, with a consequent optimization of timelines and production outputs.

In the embodiment shown in Figures 1 and 2, the laser marking assembly 22 is placed along the direction of movement D downstream of the cutting assembly 5.

In particular, the laser marking assembly 22 is arranged at the away section 4 and allows engraving on the profiled element P, prior to cutting, or on the first portion P1, subsequent to cutting.

In a further embodiment, not shown in the figures, the laser marking assembly 22 is placed along the direction of movement D upstream of the cutting assembly 5.

In particular, the laser marking assembly 22 is arranged at the supply section 3. This embodiment allows engraving on the profiled element P, prior to cutting, or on the second portion P2, subsequent to cutting.

The laser marking assembly 22 comprises a basic framework 23 associated with the basic structure 2.

In this regard, it is noted that the basic structure 2 advantageously comprises an individual ground supporting bedplate on which both the cutting assembly 5 and the basic framework 23 of the laser marking assembly 22 are mounted; alternative embodiments cannot however be ruled out in which the basic structure 2 comprises a first bedplate supporting the cutting assembly 5 and a second framework, separate and independent from the first one, supporting the laser marking assembly 22.

The laser marking assembly 22 comprises at least one laser source 24 adapted to generate the laser beam R.

The laser source 24 comprises an active medium, which determines the wavelength of the laser beam R.

Specifically, the active medium is selected based on the material on which to engrave the identification mark.

The active medium is excited through a pumping system, e.g. of the type of a diode, in order to generate electromagnetic radiation.

The active medium can be gaseous, liquid or solid.

Conveniently, the laser source 24 comprises a solid-type active medium. Preferably, the active medium is neodymium-doped yttrium aluminum garnet. The generated radiation is concentrated through a series of reflective elements and subsequently emitted through an output portion 24a of the laser source 24, thus generating the laser beam R.

Advantageously, the laser marking assembly 22 comprises at least one shutter device associated with the laser source 24 and adapted to generate a laser beam R of the pulsed type.

Specifically, the shutter device is internally associated with the laser source 24 and is of the type of a passive Q-switch.

The shutter device allows the radiation to be emitted in an alternating manner so as to allow the radiation itself to accumulate and generate a high-power laser beam R for a very short time.

Alternative embodiments cannot however be ruled out in which the laser source 24 is of a different type than described herein and, for example, it comprises a different active medium and/or different pumping system and/or in which the shutter device associated with the laser source 24 is of a different type.

It cannot however be ruled out that the shutter device is not present so as to obtain a laser beam R of the continuous type.

The laser marking assembly 22 further comprises at least one deflecting device 25 adapted to direct the laser beam R towards the profiled element P according to at least one identification mark to be engraved.

The deflecting device 25 allows the laser beam R to be directed towards the profiled element P to engrave the identification mark without the need to move the profiled element itself and/or the laser marking assembly 22.

In particular, the deflecting device 25 comprises at least one deflecting element 26, of the type of a mirror, movable in rotation around a respective axis to vary the direction of emission of the laser beam R.

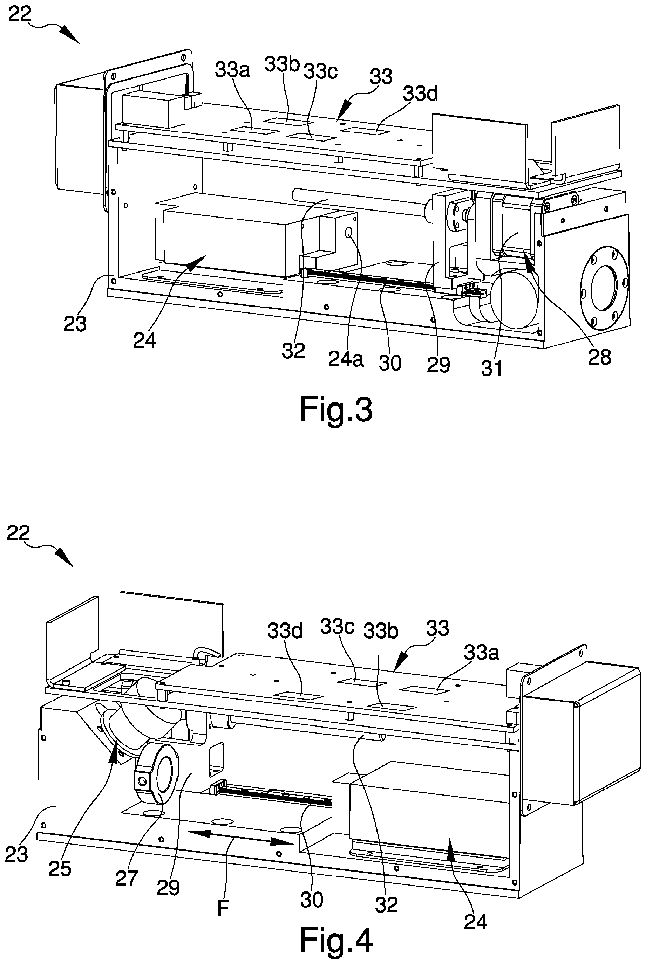

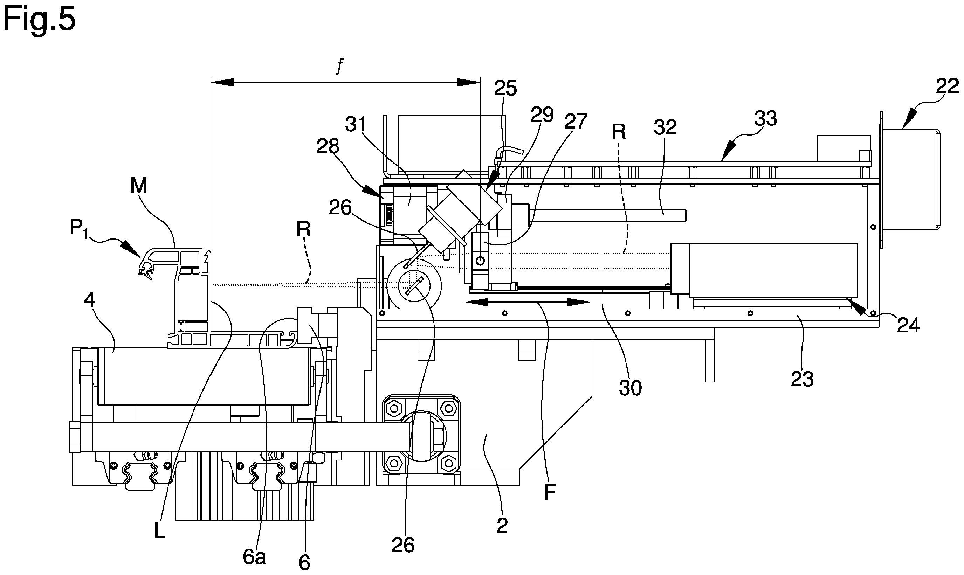

In the embodiment shown in Figures 3 to 5, the deflecting device 25 comprises at least one pair of deflecting elements 26 arranged together in such a way that the laser beam R leaving the deflecting device 25 is substantially parallel to the laser beam R entering the deflecting device 25.

This embodiment solution allows reducing the overall dimensions of the laser marking assembly 22 and allows its easy placement in the proximity of the cutting assembly 5.

Conveniently, the laser marking assembly 22 comprises at least one focusing device 27 of the laser beam R placed between the laser source 24 and the deflecting device 25 and adapted to focus the laser beam R leaving the laser source 24 towards the deflecting device 25.

In detail, the laser beam R leaving the laser source 24 consists of a number of radiations substantially parallel to each other; the diameter of the spot of the laser beam R is defined by the size of the output portion 24a of the laser source 24 and may result in insufficient energy density (i.e., energy per mm²) to mark the profiled element P and/or low resolution in the identification mark.

The presence of the focusing device 27 makes it possible to concentrate the laser beam R on a smaller cross-sectional area (i.e. ideally a dot), thus allowing for higher energy density and greater marking accuracy.

The focusing device 27 is of the type of a lens and is suitably made to obtain a converging radiation laser beam R.

It cannot be ruled out that the focusing device 27 may be of a different type, e.g., of the type of electronic liquid lenses.

The diameter of the section of the laser beam R passing through the focusing device 27 tends, therefore, to reduce as it moves away from the latter until it becomes substantially dot-like.

As a result of deflection by the deflecting device 25, the laser beam R reaches the profiled element P and allows precise engraving and provided with high resolution in the engraved identification mark.

The focusing device 27 is movable along a focusing direction F substantially parallel to the laser beam R to vary the focal length *f* of the laser beam R.

In particular, the focal length *f* may be varied according to the conformation of the profiled element P and to the actual distance of the lateral face L to be engraved with respect to the laser marking assembly 22.

This way, the laser marking assembly 22 is able to engrave the identification mark with high resolution on many types and shapes of profiled elements P. Advantageously, the laser marking assembly 22 comprises at least one movement device 28 associated with the focusing device 27 and adapted to move the latter along the focusing direction F.

The movement device 28 comprises:
- a supporting element 29 of the focusing device 27 associated with the basic framework 23 by interposition of at least one guidance element 30 extending along the focusing direction F; and
- at least one motor element 31 adapted to set in rotation a shaft 32, of the worm type, associated with the supporting element 29.

Conveniently, the station 1 comprises at least one electronic processing and control unit 33 operationally connected to the laser marking assembly 22 and comprising:
- at least one storage unit 33a configured to store the identification mark to be engraved;
- at least one control unit 33b of the focusing device 27 operationally connected to the movement device 28 and configured to move the focusing device 27 along the focusing direction F; and
- at least one actuating unit 33c of the deflecting device 25 configured to actuate the deflecting elements 26 so as to emit the laser beam R according to the identification mark to be engraved.

In particular, the control unit 33b is configured based on the conformation of the profiled element P and on the distance of the lateral face L to be engraved with respect to the laser marking assembly 22.

The electronic processing and control unit 33 further comprises a distortion offset unit 33d.

It is known, in fact, that the deflection of the laser beam R, especially when it generates an output beam parallel to the beam generated by the laser source, generates a distortion in the image that is engraved. The result, therefore, is that the effect obtained does not correspond to the desired one and in some cases may be unintelligible.

To overcome this drawback, some laser devices are provided with special lenses, F-theta lenses, that can offset these distortions in order to obtain an engraved image that matches the original image.

However, such lenses are extremely expensive and, above all, come with a considerable size.

Therefore, the station 1 according to the present invention is provided with the offset unit 33d which, by means of a special software, is adapted to deform the identification mark to be engraved in a complementary way to the deformation caused by the deflection of the laser beam R by the deflecting device 25, without requiring devices such as F-theta lenses.

The presence of the offset unit 33d allows, therefore, solving the technical problem described above within a low cost and small size solution.

Alternative embodiments cannot however be ruled out in which the offset unit 33d is not provided and/or the laser marking assembly 22 is provided with F-theta lenses or the like.

Conveniently, the control unit 33b, the actuating unit 33c and possibly the offset unit 33d too may be integrated into an individual microcontroller/microprocessor and may consist e.g. of a plurality of software instructions of a computer program.

The operation of the station 1 according to the present invention is as follows. Initially, the profiled element P is positioned by an operator on the line of movement 3, 4 based on the length of the portions of profiled element P1, P2 as desired.

The retaining devices 7 bring the profiled element P in contact with the positioning guides 6 to prevent any possible horizontal movements transverse to the direction of movement D.

Then, the pressing device 16 is moved to the retaining position to block the profiled element P on the supply section 3.

The gripping element 11 is moved by means of the movement system 12, 14, 15 towards the cutting area to block the profiled element P on the away section 4. At this point, the cutting assembly 5 carries out the cutting operation, actuating at least one of the working heads 19 depending on the width of the angle to be given to the areas to be welded of the portions P1, P2.

In turn, the laser marking assembly 22 can be actuated to engrave the identification mark on the profiled element P.

The focusing device 27 is moved along the focusing direction F, by means of the movement device 28, depending on the desired focal length *f*.

The laser source 24 is activated and emits the laser beam R through the output portion 24a towards the focusing device 27.

Then, the laser beam R reaches the deflecting device 25, which actuates the deflecting elements 26 so as to direct the laser beam itself towards the lateral face L of the profiled element P, or of the respective portion P1, P2, according to the identification mark to be engraved.

At the end of the cutting and marking operations, the extraction device 9 moves the first portion P1 away from the line of movement 3, 4.

The pressing device 16 is brought to the release position and the second portion P2 may in turn be moved away and transferred to further machining stations or be subjected to a new cutting operation.

It has in practice been ascertained that the described invention achieves the intended objects, and in particular it is pointed out that the cutting station for profiled elements, particularly for window and door frames, allows the identification of the profiled element and of the relevant portions in a practical and easy manner.

The presence of a laser marking assembly, provided with considerably small dimensions, allows reducing the timelines related to the marking operation, thus reducing the related costs and increasing the production outputs of the machining process.

In addition, the presence of a laser marking assembly allows doing without the use of consumables such as, e.g., paper and ink.

The position of the laser marking assembly in the proximity of the cutting assembly allows marking the profiled element regardless of the length of the portions to be obtained; whatever the length of the portions to be obtained, in fact, it is possible to mark the profiled element, the first portion and/or the second portion so as to obtain portions cut at the desired length and all marked.

Finally, the cutting station according to the invention allows easily engraving the profiled element at different points, moving it along the direction of movement and without the need to actuate the cutting assembly.

## Claims

1. Cutting station (1) for profiled elements, particularly for window and door frames, comprising:
- at least one basic structure (2);
- at least one line of movement (3, 4) of at least one profiled element (P) associated with said basic structure (2) and adapted to move said profiled element (P) along a direction of movement (D) in order to displace it with respect to said basic structure (2); and
- at least one cutting assembly (5) associated with said basic structure (2), arranged along said direction of movement (D) and adapted to cut said profiled element (P) according to at least one angle of width comprised between 10° and 170° with respect to said longitudinal direction to obtain at least two portions of profiled element (P1, P2);
**characterized by** the fact that it comprises at least one laser marking assembly (22) associated by being arranged or placed on said basic structure (2) and adapted to emit at least one laser beam (R) towards said profiled element (P) in order to engrave at least one identification mark on the profiled element itself.

2. Station (1) according to claim 1, **characterized by** the fact that said profiled element (P) comprises at least two main faces (M) and two lateral faces (L) that extend along a longitudinal direction and are mutually opposite and contiguous to each other and at least one of said faces (M, L) is placed resting on said line of movement (3, 4), said laser marking assembly (22) being placed in the proximity of said line of movement (3, 4) and being adapted to emit said laser beam (R) towards at least one of said lateral faces (L).

3. Station (1) according to claim 2, **characterized by** the fact that at least one of said main faces (M) is placed resting on said line of movement (3, 4), said laser marking assembly (22) being placed laterally to said line of movement (3, 4).

4. Station (1) according to one of the preceding claims, **characterized by** the fact that said laser marking assembly (22) is placed in the proximity of said cutting assembly (5).

5. Station (1) according to one of the preceding claims, **characterized by** the fact that said laser marking assembly (22) is placed along said direction of movement (D) downstream of said cutting assembly (5).

6. Station (1) according to one of the claims 1 to 4, **characterized by** the fact that said laser marking assembly (22) is placed along said direction of movement (D) upstream of said cutting assembly (5).

7. Station (1) according to one of the preceding claims, **characterized by** the fact that said laser marking assembly (22) comprises:
- at least one laser source (24) adapted to generate said laser beam (R);
- at least one deflecting device (25) adapted to direct said laser beam (R) towards said profiled element (P) according to at least one identification mark to be engraved; and
- at least one focusing device (27) of said laser beam (R) placed between said laser source (24) and said deflecting device (25) and adapted to focus said laser beam (R) leaving said laser source (24) towards said deflecting device (25).

8. Station (1) according to claim 7, **characterized by** the fact that said deflecting device (25) comprises at least one pair of deflecting elements (26) arranged together in such a way that said laser beam (R) leaving said deflecting device (25) is substantially parallel to said laser beam (R) entering said deflecting device (25).

9. Station (1) according to claim 7 or 8, **characterized by** the fact that said focusing device (27) is movable along a focusing direction (F) substantially parallel to said laser beam (R) to vary the focal length (f) of said laser beam (R).

10. Station (1) according to claim 9, **characterized by** the fact that said laser marking assembly (22) comprises at least one movement device (28) associated with said focusing device (27) and adapted to move the latter along said focusing direction (F).

11. Station (1) according to claim 10, **characterized by** the fact that it comprises at least one electronic processing and control unit (33) operationally connected to said laser marking assembly (22) and comprising:
- at least one storage unit (33a) configured to store said identification mark to be engraved;
- at least one control unit (33b) of said focusing device (27) operationally connected to said movement device (28) and configured to move said focusing device (27) along said focusing direction (F); and
- at least one actuating unit (33c) of said deflecting device (25) configured to actuate said deflecting elements (26) so as to emit said laser beam (R) according to said identification mark to be engraved.

## Patentansprüche

1. Schneidestation (1) für Profilelemente, insbesondere für Fenster- und Türrahmen, bestehend aus:
- mindestens einer Grundstruktur (2);
- mindestens einer Bewegungslinie (3, 4) für mindestens ein Profilelement (P), das mit der Grundstruktur (2) verbunden und dazu geeignet ist, das Profilelement (P) entlang einer Bewegungsrichtung (D) zu bewegen, um es in Bezug auf die Grundstruktur (2) zu verschieben; und
- mindestens einer der Grundstruktur (2) zugeordneten Schneideeinheit (5), die entlang der Bewegungsrichtung (D) angeordnet ist und das Profilelement (P) gemäß mindestens einem Breitenwinkel zwischen 10° und 170° in Bezug auf die Längsrichtung schneiden kann, um mindestens zwei Abschnitte des Profilelements (P1, P2) zu erhalten;
**dadurch gekennzeichnet, dass** sie mindestens eine Lasermarkierungseinheit (22) umfasst, die mit der Grundstruktur (2) verbunden ist, indem sie auf dieser angeordnet oder platziert ist, und die geeignet ist, mindestens einen Laserstrahl (R) in Richtung des Profilelements (P) zu emittieren, um mindestens eine Identifikationsmarkierung auf dem Profilelement selbst zu gravieren.

2. Station (1) nach Anspruch 1, **dadurch gekennzeichnet, dass** das Profilelement (P) mindestens zwei Hauptflächen (M) und zwei Seitenflächen (L) umfasst, die sich in einer Längsrichtung erstrecken und einander gegenüberliegen und aneinander angrenzen, und dass mindestens eine der Flächen (M, L) auf der Bewegungslinie (3, 4) aufliegt, wobei die Lasermarkierungseinheit (22) in der Nähe der Bewegungslinie (3, 4) angeordnet ist und den Laserstrahl (R) auf mindestens eine der Seitenflächen (L) aussenden kann.

3. Station (1) nach Anspruch 2, **dadurch gekennzeichnet, dass** mindestens eine der Hauptflächen (M) auf der Bewegungslinie (3, 4) aufliegt, wobei die Lasermarkierungseinheit (22) seitlich der Bewegungslinie (3, 4) angeordnet ist.

4. Station (1) nach einem der vorhergehenden Ansprüche, **dadurch gekennzeichnet, dass** die Lasermarkierungseinheit (22) in der Nähe der Schneideinheit (5) angeordnet ist.

5. Station (1) nach einem der vorhergehenden Ansprüche, **dadurch gekennzeichnet, dass** die Lasermarkierungseinheit (22) entlang der Bewegungsrichtung (D) stromabwärts von der Schneideinheit (5) angeordnet ist.

6. Station (1) nach einem der Ansprüche 1 bis 4, **dadurch gekennzeichnet, dass** die Lasermarkierungsbaugruppe (22) entlang der Bewegungsrichtung (D) stromaufwärts der Schneidbaugruppe (5) angeordnet ist.

7. Station (1) nach einem der vorhergehenden Ansprüche, **gekennzeichnet durch** eine Lasermarkierungsanordnung (22) umfassend:
- mindestens eine Laserquelle (24), die geeignet ist, den Laserstrahl (R) zu erzeugen;
- mindestens eine Ablenkungsvorrichtung (25), die dazu geeignet ist, den Laserstrahl (R) auf das profilierte Element (P) gemäß mindestens einer zu gravierenden Markierung zu richten; und
- mindestens eine Fokussierungsvorrichtung (27) des Laserstrahls (R), die zwischen der Laserquelle (24) und der Ablenkvorrichtung (25) angeordnet ist und den die Laserquelle (24) verlassenden Laserstrahl (R) auf die Ablenkvorrichtung (25) fokussieren kann.

8. Station (1) nach Anspruch 7, **dadurch gekennzeichnet, dass** die Ablenkvorrichtung (25) mindestens ein Ablenkungselementepaar (26) umfasst, die so zusammen angeordnet sind, dass der die Ablenkvorrichtung (25) verlassende Laserstrahl (R) im Wesentlichen parallel zu dem in die Ablenkvorrichtung (25) eintretenden Laserstrahl (R) ist.

9. Station (1) nach Anspruch 7 oder 8, **dadurch gekennzeichnet, dass** die Fokussiervorrichtung (27) entlang einer Fokussierrichtung (F) im Wesentlichen parallel zu dem Laserstrahl (R) beweglich ist, um die Brennweite (f) des Laserstrahls (R) zu verändern.

10. Station (1) nach Anspruch 9, **dadurch gekennzeichnet, dass** die Lasermarkierungsbaugruppe (22) mindestens eine Bewegungsvorrichtung (28) umfasst, die mit der Fokussiervorrichtung (27) verbunden und geeignet ist, letztere entlang der Fokussierrichtung (F) zu bewegen.

11. Station (1) nach Anspruch 10, **dadurch gekennzeichnet, dass** sie mindestens eine elektronische Verarbeitungs- und Steuereinheit (33) umfasst, die betriebsmäßig mit der Lasermarkierungseinheit (22) verbunden ist, umfassend:
- mindestens eine Speichereinheit (33a), die so konfiguriert ist, dass sie die zu gravierende Identifikationsmarke speichert;
- mindestens eine Steuereinheit (33b) der Fokussiervorrichtung (27), die betriebsmäßig mit der Bewegungsvorrichtung (28) verbunden und so konfiguriert ist, dass sie die Fokussiervorrichtung (27) entlang der Fokussierrichtung (F) bewegt; und
- mindestens eine Betätigungseinheit (33c) der Ablenkvorrichtung (25), die so konfiguriert ist, dass sie die Ablenkelemente (26) betätigt, um den Laserstrahl (R) entsprechend der zu gravierenden Identifikationsmarke zu emittieren.

## Revendications

1. - Poste de découpe (1) pour éléments profilés, en particulier pour cadres de fenêtre et de porte, comprenant :
- au moins une structure de base (2) ;
- au moins une ligne de déplacement (3, 4) d'au moins un élément profilé (P) associée à ladite structure de base (2) et agencée pour déplacer ledit élément profilé (P) selon une direction de déplacement (D) afin de le déplacer par rapport à ladite structure de base (2) ; et
- au moins un ensemble de découpe (5) associé à ladite structure de base (2), disposé selon ladite direction de déplacement (D) et agencé pour découper ledit élément profilé (P) suivant au moins un angle de largeur compris entre 10° et 170° par rapport à ladite direction longitudinale pour obtenir au moins deux parties d'élément profilé (P1, P2) ;
**caractérisé par le fait qu'**il comprend au moins un ensemble de marquage au laser (22) associé en étant disposé ou placé sur ladite structure de base (2) et agencé pour émettre au moins un faisceau laser (R) vers ledit élément profilé (P) afin de graver au moins une marque d'identification sur l'élément profilé lui-même.

2. - Poste (1) selon la revendication 1, **caractérisé par le fait que** ledit élément profilé (P) comprend au moins deux faces principales (M) et deux faces latérales (L) qui s'étendent selon une direction longitudinale et sont mutuellement opposées et contiguës l'une à l'autre et au moins une desdites faces (M, L) est placée en appui sur ladite ligne de déplacement (3, 4), ledit ensemble de marquage au laser (22) étant placé à proximité de ladite ligne de déplacement (3, 4) et étant agencé pour émettre ledit faisceau laser (R) vers au moins une desdites faces latérales (L).

3. - Poste (1) selon la revendication 2, **caractérisé par le fait qu'**au moins une desdites faces principales (M) est placée en appui sur ladite ligne de déplacement (3, 4), ledit ensemble de marquage au laser (22) étant placé latéralement à ladite ligne de déplacement (3, 4).

4. - Poste (1) selon l'une des revendications précédentes, **caractérisé par le fait que** ledit ensemble de marquage au laser (22) est placé à proximité dudit ensemble de découpe (5).

5. - Poste (1) selon l'une des revendications précédentes, **caractérisé par le fait que** ledit ensemble de marquage au laser (22) est placé selon ladite direction de déplacement (D) en aval dudit ensemble de découpe (5).

6. - Poste (1) selon l'une des revendications 1 à 4, **caractérisé par le fait que** ledit ensemble de marquage au laser (22) est placé selon ladite direction de déplacement (D) en amont dudit ensemble de découpe (5).

7. - Poste (1) selon l'une des revendications précédentes, **caractérisé par le fait que** ledit ensemble de marquage au laser (22) comprend :
- au moins une source laser (24) agencée pour générer ledit faisceau laser (R) ;
- au moins un dispositif de déviation (25) agencé pour diriger ledit faisceau laser (R) vers ledit élément profilé (P) en fonction d'au moins une marque d'identification à graver ; et
- au moins un dispositif de focalisation (27) dudit faisceau laser (R) placé entre ladite source laser (24) et ledit dispositif de déviation (25) et agencé pour focaliser ledit faisceau laser (R) sortant de ladite source laser (24) vers ledit dispositif de déviation (25) .

8. - Poste (1) selon la revendication 7, **caractérisé par le fait que** ledit dispositif de déviation (25) comprend au moins une paire d'éléments de déviation (26) disposés ensemble de telle sorte que ledit faisceau laser (R) sortant dudit dispositif de déviation (25) est sensiblement parallèle audit faisceau laser (R) entrant dans ledit dispositif de déviation (25).

9. - Poste (1) selon la revendication 7 ou 8, **caractérisé par le fait que** ledit dispositif de focalisation (27) est déplaçable selon une direction de focalisation (F) sensiblement parallèle audit faisceau laser (R) pour faire varier la distance focale (f) dudit faisceau laser (R).

10. - Poste (1) selon la revendication 9, **caractérisé par le fait que** ledit ensemble de marquage au laser (22) comprend au moins un dispositif de déplacement (28) associé audit dispositif de focalisation (27) et agencé pour déplacer ce dernier selon ladite direction de focalisation (F).

11. - Poste (1) selon la revendication 10, **caractérisé par le fait qu'**il comprend au moins une unité électronique de traitement et de commande (33) reliée de manière fonctionnelle audit ensemble de marquage au laser (22) et comprenant :
- au moins une unité de stockage (33a) configurée pour stocker ladite marque d'identification à graver ;
- au moins une unité de commande (33b) dudit dispositif de focalisation (27), reliée de manière fonctionnelle audit dispositif de déplacement (28) et configurée pour déplacer ledit dispositif de focalisation (27) selon ladite direction de focalisation (F) ; et
- au moins une unité d'actionnement (33c) dudit dispositif de déviation (25), configurée pour actionner lesdits éléments de déviation (26) de façon à émettre ledit faisceau laser (R) en fonction de ladite marque d'identification à graver.
